# EUROPEAN PATENT APPLICATION

(11) **EP 4 667 281 A1**
(43) Date of publication of application: **24.12.2025**
(21) Application number: 25183818.1
(22) Date of filing: 18.06.2025
(51) Int. Cl.: B60N 2/01, B60N 2/015, B60N 2/24, B60N 2/68, B61D 33/00

(54) **SUPPORT DEVICE FOR AT LEAST ONE SEAT OF ROAD-RAIL VEHICLES FOR PUBLIC TRANSPORT AND METHOD FOR PRODUCING AND INSTALLING IT**

(30) Priority: 19.06.2024 IT 202400014128
(71) Applicant: F.I.S.A. - Fabbrica Italiana Sedili Autoferroviari - S.r.l., 33010 Rivoli di Osoppo (UD) (IT)
(72) Inventor: De Simon, Davide, 33100 Udine (IT)
(74) Representative: Petraz, Gilberto Luigi

(57) **Abstract**

Support device (10) for supporting one or more seats (100) of a road-rail vehicle for public transport having a floor (101) and at least one wall (102) substantially perpendicular thereto, wherein each seat (100) has a load-bearing structure (103). The support device (10) comprises a first support element (11) configured to be disposed substantially horizontal under the load-bearing structure (103) of each seat (100) to support it, and to be associated cantilevered with the wall (102) at a certain distance (D) from the floor (101).

## Description

### FIELD OF THE INVENTION

The present invention concerns both a support device for supporting one or more seats, in particular for passengers, for road-rail vehicles for public transport, whether by road or rail, such as for example railway carriages, buses, or similar vehicles, and also a method for producing and installing it.

### BACKGROUND OF THE INVENTION

Several support devices are known in the road-rail vehicle sector which are configured to support a seat, or a pair of seats paired with each other, with respect to the vehicle's structure.

In addition to the different types of support devices comprising one or more legs, or uprights, having the lower part attached to the vehicle' floor, from European patent EP-B-3,466,684 granted to the Applicant a support device for one or two seats of road-rail vehicles is known, which comprises a cylindrical tubular bar configured to be welded to the shell of each seat and having a first bracket integrally attached at one end thereof. The first bracket is configured to be attached directly to a vertical wall of the vehicle, distant from its floor, so that the cylindrical tubular bar is disposed horizontally and cantilevered with respect to the same vertical wall. The support device also comprises a metal fork disposed inclined and having two cylindrical tubular arms diverging from top to bottom. Each of the two arms of the fork has an upper end attached to the horizontal cylindrical tubular bar, and a lower end attached to a second bracket, which in turn is configured to be attached to the same vertical wall of the vehicle, but near its floor.

The aforementioned known support device, despite being very robust and raised from the vehicle's floor, however, has the disadvantage of being a rigid enbloc, so that its assembly onto the vehicle's vertical wall is complex, laborious and impractical, and requires a rather long amount of time, with consequent high costs.

In addition, U.S. Patent Application US2007069558, European Patent EP3676150 and Chinese Utility Model CN211969229 disclose vehicle seat support devices which are quite complex and difficult to install.

There is therefore the need to further perfect a support device for one or more seats, in particular for the passengers, for road-rail vehicles for public transport, that does not present the disadvantages of the state of the art.

To achieve this, it is necessary to resolve the technical problem of making the support device as easy to handle as possible, so that its assembly and possible disassembly are simple, require less time and can therefore be done at low cost, while keeping its functionality unchanged and at the same time guaranteeing the stability and safety of the seats mounted on it.

In particular, one purpose of the present invention is to provide a support device for one or more seats, in particular for the passengers, for road-rail vehicles for public transport, which is simple to produce, install, and couple, even removably, to the seats themselves.

Another purpose of the present invention is to provide a support device for one or more seats, in particular for the passengers, for road-rail vehicles for public transport, which is relatively lightweight and at the same time sufficiently robust to safely support both the seats and also the loads the latter have to support in line with current regulations.

Another purpose of the present invention is to provide a support device for one or more seats, in particular for the passengers, for road-rail vehicles for public transport, which allows to assemble the load-bearing structures, or shells, of the seats in a simple and easily removable manner, so that the same support device can also be used in the steps of transporting the seats from their production site to the site where they will be installed on the road-rail vehicles for public transport, even if the installation site is very distant from the first site, even in another country.

Another purpose of the present invention is to perfect a production method for producing a support device for one or more seats, in particular for the passengers, for road-rail vehicles for public transport, which is simple and comprises a small number of work steps that can be performed either manually, even by non-expert personnel, or automatically, for example using programmed robots.

Another purpose of present invention is to perfect an installation method for installing on a road-rail vehicle for public transport a support device for one or more seats, in particular for the passengers of the road-rail vehicle, which is simple and requires assembly steps that are also simple, and which can be performed even by non-expert personnel.

Another purpose of the present invention is to provide a support device for one or more seats, in particular for the passengers, for road-rail vehicles for public transport, and to perfect an associated installation method, which allow to achieve better structural and safety performances compared to known support devices, so that a) the support device passes the UNIFE REF 001 - 2014 - Interior Passive Safety regulation (the interior passive safety requirements apply to the internal elements of the vehicle that interact with passengers or staff), which provides for static and dynamic tests that simulate the behavior of the seat in the event of an accident, and b) each complete seat mounted on the support device passes EN 12663, category P-II (paragraph 6.5.2) with a passenger of 70 kg (in accordance with EN 15663).

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to resolve the technical problem described above in a new and original way, also achieving considerable advantages compared to the state of the prior art, a support device according to the present invention is configured to support one or more seats, in particular for the passengers, of a road-rail vehicle for public transport having a floor and at least one wall substantially perpendicular thereto, wherein each of the one or more seats has a load-bearing structure and wherein the support device comprises at least a first support element configured both to be disposed substantially horizontal under the load-bearing structure of each of the one or more seats to support it, and also to be associated cantilevered with the wall at a certain distance from the floor, for example of a few dozen centimeters.

In accordance with one aspect of the present invention, the support device also comprises a first attachment element, or console, configured to be coupled removably, snap-in, by same-shape or bayonet coupling, to a first end of the first support element and provided with first attachment means configured to allow its attachment, preferably removable, to the wall, in order to associate the first support element therewith, the shape and at least transverse sizes of the first end and of the first attachment element being such that the latter also acts as a centering element for the first support element.

This at least has the advantage that the first support element, possibly already connected to the one or more support structures of the one or more seats of the road-rail vehicle for public transport, is not attached cantilevered to the wall of the road-rail vehicle directly, but by means of the first attachment element.

In accordance with another aspect of the present invention, the support element also comprises a second support element which during use is inclined with respect to the first support element and comprises an upper end configured to be associated with the first support element and a lower end configured to be associated with the wall more or less near the floor, or with the latter near the wall, or with the corner between the floor and the wall.

In accordance with another aspect of the present invention, the support element also comprises a second attachment element configured to be removably coupled, or attached, to the lower end of the second support element and provided with second attachment means configured to allow its attachment, preferably removable, to the wall and/or to the floor.

In accordance with another aspect of the present invention, the support element also comprises a third attachment element configured to be removably coupled, or attached, to the upper end of the second support element and provided with third attachment means configured to allow its attachment, preferably removable, to the first support element.

In accordance with another aspect of the present invention, the first support element comprises, or consists of, a tubular body which at least in correspondence with the first end is provided with a cavity having a polygonal cross-section; moreover, the first attachment element comprises a coupling body with a polygonal cross-section substantially the same as that of the cavity and with external sizes substantially the same as, or slightly smaller than, the internal sizes thereof; the coupling body is configured to be inserted in the cavity in order to create the coupling between the first support element and the first attachment element, advantageously after the latter has been attached to the wall.

In accordance with another aspect of the present invention, the first attachment element also comprises a first plate integral with the tubular body and disposed on a plane substantially perpendicular thereto.

In accordance with another aspect of the present invention, the first attachment means comprise first through holes present in the first plate and configured to accommodate attachment members by means of which the first plate can be attached to the wall.

In accordance with another aspect of the present invention, the coupling body is internally hollow.

In accordance with another aspect of the present invention, the second support element comprises, or consists of, a rigid body, preferably tubular.

In accordance with another aspect of the present invention, a production method for producing a support device having at least the first of the aspects disclosed above essentially comprises a manufacturing step in which at least the first support element and the first attachment element are manufactured separately, in series or in parallel.

In accordance with another aspect of the present invention, during the manufacturing step as above, the second support element, the second attachment element and the third attachment element are also manufactured separately, in series or in parallel; furthermore, the production method also comprises both a first assembly step in which the second and third attachment elements are removably coupled, or attached, to the two ends, lower and upper respectively, of the second support element, and also a second assembly step in which the third attachment element is coupled to the first support element.

In accordance with another aspect of the present invention, an installation method for installing on a road-rail vehicle for public transport a support device having at least the first of the aspects disclosed above, to support one or more seats, in particular for the passengers, each having a load-bearing structure, comprises at least a first installation step in which the first attachment element is attached to a wall of the road-rail vehicle, and a subsequent second installation step in which the first support element, possibly already coupled to one or more load-bearing structures of the one or more seats, is coupled to the first attachment element.

### DESCRIPTION OF THE DRAWINGS

These and other aspects, characteristics and advantages of the present invention will become apparent from the following description of an embodiment, given as a non-restrictive example with reference to the attached drawings wherein:
- fig. 1 is a three-dimensional view of a first embodiment of a support device for one or more seats for road-rail vehicles for public transport according to the present invention, shown in an exploded form;
- fig. 2 is an enlarged detail of the support device of fig. 1;
- fig. 3 is a front view of the support device of fig. 1, on which a pair of seats for road-rail vehicles for public transport is installed.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF AN EMBODIMENT OF THE PRESENT INVENTION

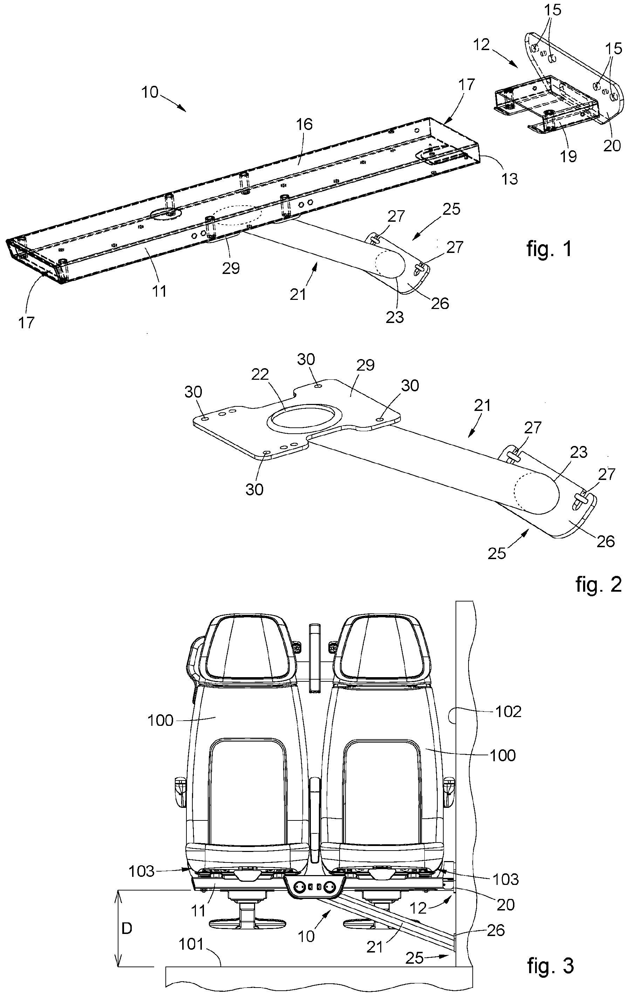

With reference to fig. 1, a support device 10 according to the present invention is configured to support one or more seats 100, in particular for the passengers, shown schematically in fig. 3, of a road-rail vehicle for public transport, of any known type whatsoever or one that will be developed in the future, of which a floor 101 and a wall 102, for example lateral, substantially perpendicular to the floor 101, are shown schematically in fig. 3. Each of the seats 100 comprises a load-bearing structure 103, of a known type or, for example, such as the one subject to an industrial invention patent application filed by the Applicant at the same time as the present industrial invention patent application.

We must clarify that the various arrangements in space of the support device 10, as well as of the parts and components thereof, mentioned in the present disclosure and in the attached claims, refer to when the same support device 10 is in a position of use, installed on a road-rail vehicle for public transport, unless otherwise specified.

The support device 10 comprises a first support element 11 (figs. 1 and 3) configured both to be disposed substantially horizontally under the load-bearing structure 103 of each seat 100 and to be attached thereto, preferably in a removable manner, and also to be associated cantilevered with the wall 102, as will be described in detail below, at a certain distance D (fig. 3) from the floor 101, for example comprised between 200 mm and 600 mm.

In accordance with one aspect of the present invention, the support device 10 further comprises a first attachment element, or console, 12 (figs. 1 and 3) configured to be coupled, preferably removably, to a first end 13 (fig. 1) of the first support element 11 and provided with first attachment means 15, which will be described in detail below, which are configured to allow its attachment, preferably removable, to the wall 102.

Preferably, the coupling between the first support element 11 and the console 12 is done through snap-in, same-shape or bayonet coupling.

Therefore, advantageously, the first support element 11 is not attached to the wall 102 directly, but by means of the first attachment element 12.

Furthermore, the shape and at least transverse sizes of the first end 13 of the first support element 11 and of the first attachment element 12 are such that the latter also acts as a centering element for the first support element 11.

Some embodiments of the present invention provide that the first support element 11 comprises, or consists of, a tubular body 16, preferably made of metal, which is provided, at least in correspondence with the first end 13 but preferably along its entire length, with a cavity 17 having a polygonal cross-section, preferably rectangular or trapezoidal, and that the first attachment element 12 comprises a coupling body 19, preferably made of metal and internally hollow, with a polygonal cross-section substantially the same as that of the cavity 17, and with external sizes substantially the same as, or slightly smaller than, the internal sizes of the cavity 17. The coupling body 19 is configured to be inserted into the cavity 17 so as to create the coupling, preferably removable, snap-in, same-shape or bayonet, between the first support element 11 and the first attachment element 12, and then possibly be attached, for example by means of screws or bolts.

The length of the first support element 11 is correlated to the width of the single seat 100, or of the two or more seats 100, which it has to support. By way of indication, the aforementioned length is about 450 mm in the case of a single seat 100 (not shown in the drawings), or about 900 mm in the case of two paired seats 100, as shown in fig. 3.

The first attachment element 12 further comprises a first plate 20 (figs. 1 and 3), preferably made of metal, integral with the coupling body 19 and disposed on a plane substantially perpendicular thereto.

Some embodiments of the present invention provide that the first attachment means 15 comprise through holes present in the first plate 20 and configured to accommodate attachment members of a known type, such as screws, bolts or suchlike, by means of which the same first plate 20 can be easily attached to the wall 102 at the certain distance D (fig. 3) from the floor 101.

In order to improve the stability of the first support element 11 and prevent it from giving under the weight of the seats 100 and the load that may weigh on them, the support device 10 also comprises a second support element 21 (figs. 1, 2 and 3) configured to be disposed, during use, inclined by an angle comprised approximately between about 20° and about 60° with respect to the floor's 101 plane (fig. 3), as a function of the length of the first support element 11 and the distance D.

The second support element 21 comprises, or consists of, a rigid body, preferably cylindrical tubular, having an upper end 22 (fig. 2) configured to be associated with the first support element 11, for example in a substantially central zone thereof, as will be described in detail below, and a lower end 23, configured to be associated, by means of a second attachment element 25, with the wall 102, more or less near the floor 101 (fig. 3), for example at a distance of up to about 250 mm, or with the same floor 101 near the wall 102, or with the corner between the floor 101 and the wall 102.

In the example given here, the second attachment element 25 comprises a second plate 26 (figs. 1 and 2), preferably made of metal, configured to be coupled, in a removable manner, or attached, to the lower end 23 of the second support element 21. The second plate 26 is provided with second attachment means 27, which are configured to allow to attach, preferably in a removable manner, the second attachment element 25, and consequently the second support element 21, to the wall 102. For example, the second attachment means 27 comprise, or consist of, two slits configured to accommodate attachment members of a known type, such as screws, bolts, or suchlike.

The support device 10 further comprises a third attachment element 29 configured to be coupled, in a removable manner, or attached, to the upper end 22 of the second support element 21 and provided with third attachment means 30 (fig. 2) configured to allow the coupling, preferably removable, of the third attachment element 29 to the first support element 11. In the embodiment described here, the third attachment element 29 comprises a third plate, preferably made of metal, and the third attachment means 30 comprises, or consists of, a plurality of through holes created on the plate and configured to accommodate attachment members of a known type, such as screws, bolts, or suchlike.

It should be noted that, in order to facilitate the assembly of the support device 10 onto the road-rail vehicle for public transport on which the seats 100 are to be installed, the plane on which the second plate 26 lies and the plane on which the third attachment element 29 lies form an angle between them that is the same as the one formed between the floor 101 and the lower part of the wall 102.

The present invention also comprises both a production method for producing the support device 10, and also an installation method for installing, on a road-rail vehicle for public transport, a support device 10 for supporting one or more seats 100, in particular for the passengers, each having a load-bearing structure 103.

In particular, the production method comprises:
- a manufacturing step, in which at least the first support element 11, the first attachment element 12, the second support element 21, the second attachment element 25 and the third attachment element 29 are manufactured separately, in series or parallel;
- a first assembly step, in which the second and third attachment elements 25, 29 are removably coupled, or attached, to the lower 23 and upper 22 ends, respectively, of the second support element 21; and
- a second assembly step, in which the third attachment element 29 is coupled to the first support element 11, for example by means of screws, bolts, or suchlike.

The installation method instead essentially comprises a first installation step in which the first attachment element 12 is attached to the wall 102, and a subsequent second installation step in which the first support element 11, possibly already coupled to one or more load-bearing structures 103 of the one or more seats 100, is coupled to the first attachment element 12.

The support device 10 and the production and installation methods according to the present invention, disclosed above, allow both to resolve the technical problem mentioned above, and also to achieve all the purposes described above, as well as to achieve the following advantages compared to known support devices and their production and installation methods:
- possibility of easy access to attach the first attachment element 12 to the wall 102 of the road-rail vehicle for public transport, and therefore possibility of using pneumatic guns during assembly; this allows to speed up the installation activities;
- possibility of planning the activities for assembling the seats 100, in particular for the passengers, in the road-rail vehicle for public transport, organizing a first phase that provides the assembly of the first attachment element 12 onto the wall 102 and subsequently the assembly of the first support element 11 of the seats 100, which is performed much faster thanks to this support device 10, which is substantially modular and sectional, in the sense that it comprises several components, as described above;
- the racks for transporting the seats 100, in particular for the passengers - both for possible movements within the production company, and also for transport to customers - can already be prepared with one or more of the aforementioned first attachment elements 12, which simulate the wall attachment, so that each seat, or plurality of seats 100, for example a pair, can be assembled in a similar way for transport, for example in a vehicle or a container; this allows to speed up activities and not have to use disposable packaging.

In addition, the support device 10 and the method described heretofore preferably allow for a "bayonet" assembly, by using the console 12 (which is previously attached to the wall 102) on which the first support element 11 is inserted. This new and original solution allows to:
a) overcome the problems of the attachment from the console 12 to the wall 102, whose screws would otherwise not be reachable with traditional cantilevered systems;
b) improve the times required for assembly onto a road-rail vehicle compared to known support devices, since the latter are more complex and do not have a selfcentering system when assembling the horizontal support element, or first support element 11, in the console 12.

It is clear that modifications and/or additions of parts and/or steps may be made to the support device 10 and to the method as described heretofore, without thereby departing from the field and scope of the present invention, as defined by the claims.

It is also clear that, although the present invention has been described with reference to a specific example, a person of skill in the art will be able to achieve other equivalent forms of support devices for seats for road-rail vehicles for public transport, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Support device (10) for supporting one or more seats (100), in particular for the passengers, of a road-rail vehicle for public transport having a floor (101) and at least one wall (102) substantially perpendicular thereto, wherein each of said one or more seats (100) has a load-bearing structure (103) and wherein said support device (10) comprises at least a first support element (11) configured both to be disposed substantially horizontal under said load-bearing structure (103) of each of said one or more seats (100) to support it, and also to be associated cantilevered with said wall (102) at a certain distance (D) from said floor (101), **characterized in that** it also comprises a first attachment element, or console, (12) configured to be coupled removably, snap-in, by same-shape or bayonet coupling to a first end (13) of said first support element (11) and provided with first attachment means (15) configured to allow its attachment, preferably removable, to said wall (102), in order to associate said first support element (11) therewith, the shape and at least transverse sizes of said first end (13) and of said first attachment element (12) being such that the latter also acts as a centering element for said first support element (11).

2. Support device (10) as in claim 1, **characterized in that** it also comprises a second support element (21) which during use is inclined with respect to said first support element (11) and comprises an upper end (22) configured to be associated with said first support element (11) and a lower end (23) configured to be associated with said wall (102) near said floor (101), or with the latter near said wall (102), or with the corner between said floor (101) and said wall (102).

3. Support device (10) as in claim 2, **characterized in that** it also comprises a second attachment element (25) which is configured to be removably coupled, or attached, to said lower end (23) of said second support element (21) and provided with second attachment means (27) configured to allow its attachment, preferably removable, to said wall (102) and/or to said floor (101).

4. Support device (10) as in claim 2 or 3, **characterized in that** it also comprises a third attachment element (29) which is configured to be removably coupled, or attached, to said upper end (22) of said second support element (21) and provided with third attachment means (30) configured to allow its attachment, preferably removable, to said first support element (11).

5. Support device (10) as in any claim hereinbefore, **characterized in that** said first support element (11) comprises, or consists of, a tubular body (16) which at least in correspondence with said first end (13) is provided with a cavity (17) having a polygonal cross-section **and in that** said first attachment element (12) comprises a coupling body (19) with a polygonal cross-section substantially the same as that of said cavity (17) and with external sizes substantially the same as, or slightly smaller than, the internal sizes thereof, wherein said coupling body (19) is configured to be inserted in said cavity (17) in order to create the coupling between said first support element (11) and said first attachment element (12), advantageously after the latter has been attached to said wall (102).

6. Support device (10) as in claim 5, **characterized in that** said first attachment element (12) also comprises a first plate (20) integral with said tubular body (16) and disposed on a plane substantially perpendicular thereto.

7. Support device (10) as in claim 6, **characterized in that** said first attachment means (15) comprise first through holes present in said first plate (20) and configured to accommodate attachment members by means of which said first plate (20) can be attached to said wall (102).

8. Support device (10) as in claim 5, 6 or 7, **characterized in that** said second support element (21) comprises, or consists of, a rigid body, preferably tubular.

9. Production method for producing a support device (10) as in any claim hereinbefore, **characterized in that** it essentially comprises a manufacturing step in which at least said first support element (11) and said first attachment element (12) are manufactured separately, at least in series or in parallel.

10. Installation method for installing on a road-rail vehicle for public transport a support device (10) as in any claim from 1 to 8, to support one or more seats (100), in particular for the passengers, each having a load-bearing structure (103), **characterized in that** it comprises at least a first installation step in which said first attachment element (12) is attached to a wall (102) of said means of transport, a subsequent second installation step in which said first support element (11), possibly already coupled to one or more load-bearing structures (103) of said one or more seats (100), is coupled removably, snap-in, by same-shape or bayonet coupling to said first attachment element (12).
